# EUROPEAN PATENT APPLICATION

(11) **EP 4 509 711 A1**
(43) Date of publication of application: **19.02.2025**
(21) Application number: 23382846.6
(22) Date of filing: 14.08.2023
(51) Int. Cl.: F03D 13/40, B60P 3/40

(54) **METHOD FOR TRANSPORTING A ROTOR BLADE, TRANSPORT SYSTEM AND TRANSPORT ARRANGEMENT**

(71) Applicant: Nordex Energy Spain, S.A.U., 31395 Barasoain (Navarra) (ES)
(72) Inventor: Bidegain, Iñaki, 31395 BARASOAIN (ES); Arraztoa,, Unai, 31395 BARASOAIN (ES); Osorio, Juan Manuel, 31395 BARASOAIN (ES)
(74) Representative: Epping - Hermann - Fischer

(57) **Abstract**

According to an embodiment, the method for transporting a rotor blade for a wind turbine comprises a step of providing a transport arrangement in which the rotor blade is supported in an assembly position. In a further step, the rotor blade is transported in the transport arrangement from a storage site to a construction site so that, when the rotor blade arrives at the construction site, the rotor blade is in the assembly position and can be lifted up to the rotor hub of the wind turbine and can be connected to the rotor hub without a rotation of the rotor blade around its length axis.

## Description

The present disclosure relates to a method for transporting a rotor blade. Furthermore, the present disclosure relates to a transport system, a transport arrangement, a vehicle and a use of a transport system.

Wind turbines are widely known and are used to convert wind energy into electric energy. The lengths of the rotor blades used in such wind turbines have increased in recent years. Accordingly, the transport of these rotor blades and the assembly of the corresponding wind turbines is a challenge.

One object to be achieved is to provide a method for transporting a rotor blade, wherein said method contributes to a reduction of the assembly time and/or a reduction of the space needed at the construction site of the wind turbine. Further objects to be achieved are to provide a transport system, a transport arrangement and a vehicle with which such a method can be executed.

First, the method for transporting a rotor blade is specified. The method is, in particular, for transporting a rotor blade for a wind turbine with a hydraulic pitch setting system. That is, the wind turbine is configured such that, during operation of the wind turbine, the pitch angles of the rotor blades of the wind turbine are changed hydraulically, e.g. with the help of at least one hydraulic cylinder per rotor blade.

According to an embodiment, the method for transporting a rotor blade for a wind turbine comprises a step of providing a transport arrangement in which the rotor blade is supported in an assembly position. In a further step, the rotor blade is transported in the transport arrangement from a storage site to a construction site so that, when the rotor blade arrives at the construction site, the rotor blade is in the assembly position and can be lifted up to the rotor hub of the wind turbine and can be connected to the rotor hub without a rotation of the rotor blade around its length axis.

The transport of rotor blades for wind turbines with a hydraulic pitch setting system can be challenging. Once the rotor blade arrives at the construction site on the wind turbine platform, and before the rotor blade is lifted for installation on the rotor hub, the rotor blade normally has to be rotated into the correct position, herein called "assembly position", so that it can be installed on the rotor hub blade bearing. This is because the rotation of the blade bearing installed in the rotor hub by the hydraulic pitch setting system is only available in a certain range, i.e. it does not allow a 360° rotation of the blade bearing. Thus, for the connection of the rotor blade to the blade bearing, the rotor blade has to be rotated because the blade bearing itself cannot be brought into the required angular position. The rotation of the rotor blade at the construction site, however, requires additional space and also takes a lot of time.

The present invention is based, inter alia, on the idea that the rotation of the rotor blade at the construction site can be dismissed when the rotor blade is already transported in the assembly position so that, when it arrives at the construction site, the rotor blade is already in the assembly position and only has to be lifted to the rotor hub, i.e. no rotation around its length axis is necessary.

The transport arrangement comprises, besides the rotor blade, components which support and secure the rotor blade in the assembly position. In this transport arrangement, the rotor blade is then transported from the storage site to the construction site while the rotor blade is kept in the assembly position. The distance between the storage site and the construction site may be more than 100 m or more than 1 km, for example.

Herein, when the rotor blade is supported in a certain position, this means that the rotor blade is reliably secured in that position for the transport. For example, transport of the rotor blade in that position without slippage of the rotor blade relative to the other components of the transport arrangement and/or without extensive vibration of the rotor blade and/or without contact of the rotor blade to the ground is enabled.

The assembly position is, in particular, a position in which the suction side of the rotor blade faces upwards and the pressure side faces downwards. When viewed along the length axis from the root end towards the tip end, the joint line between the blade shells of the rotor blade may decrease from left to right in the assembly position. In other words, in this viewing direction and when the rotor blade is in the assembly position, the joint line between the blade shells is rotated clockwise with respect to the horizontal line by more than 0° and less than 90°, e.g. by an angle between 2° and 10°.

The terms "up", "upwards", "down" and "downwards" are herein used with respect to the direction of gravity. Particularly, "up" and "upwards" are directions away from the ground or from the road and "down" or "downwards" are directions facing the ground or the road, respectively.

According to a further embodiment, the transport arrangement comprises, besides the rotor blade, a root support element and a clamping device. The root support element is connected to the root end of the rotor blade. A section of the rotor blade distant from the root end is clamped into the clamping device.

The root support element may be, for example, a root transport frame with a support surface onto which the root end of the rotor blade can be laid. The root support element may comprise a plurality of connection means provided for connecting the root support element with the root end of the rotor blade. The connection means are, for example, holes, slots or drillings, through which bolts of the rotor blade can be guided.

The clamping device may comprise two parts which are hingably and/or pivotively connected to each other. The clamping device is, for example, configured to be opened in order to enable the insertion of a rotor blade and may be configured to be closed in order to secure the rotor blade. For example, an upper part of the clamping device can be lifted with respect to a lower part of the clamping device in order to open the clamping device and can then be let down again with respect to the lower part in order to close the clamping device. The clamping device may be configured such that the closed configuration can be secured, e.g. by using bolts or screws.

The clamping device is configured to clamp a section of the rotor blade which is distant from the root end and to apply pressure in order to hold the rotor blade in position. For example, the section is closer to the tip end than to the root end of the rotor blade. For example, the clamping device is configured to clamp a section of the rotor blade which is at least half or at least 2/3 of the length of the rotor blade away from the root end.

The root support element and the clamping device are formed such that they are able to reliably support and reliably secure the rotor blade for its transport in the assembly position.

According to a further embodiment, the transport of the rotor blade from the storage site to the construction site is a road transport. Particularly, the rotor blade is transported with the help of a truck and/or a dolly.

According to a further embodiment, the method comprises a further step of transporting the rotor blade from a starting site to the storage site in a further transport arrangement. The rotor blade is supported in a further position in the further transport arrangement. In the further position, the rotor blade is rotated around its length axis compared to the assembly position.

The further transport arrangement comprises, besides the rotor blade, components which support and reliably hold the rotor blade in the further position. The further transport arrangement is, for example, different from the transport arrangement in at least one of those components. However, one or more components of the further transport arrangement maybe the same as for the transport arrangement. For example, the further transport arrangement uses a further clamping device which is different from the above-mentioned clamping device. The root support element may be the same for the transport arrangement and the further transport arrangement.

The transport from the starting site to the storage site in the further position may be a road transport and/or a sea transport. It is executed before the transport from the storage site to the construction site in the assembly position. The starting site may be a production site of the rotor blade and/or a harbor.

According to a further embodiment, the rotor blade is rotated by at least 5° or at least 8° or at least 11° around its length axis between the further position and the assembly position. Additionally or alternatively, the rotor blade is rotated by at most 20° or at most 16° or at most 13° between the further position and the assembly position. For example, the rotor blade is rotated by 12° between the further position and the assembly position. Particularly, when viewed along the length axis from the root end towards the tip end of the rotor blade, the rotor blade is rotated clockwise from the further position to the assembly position.

The further position is, in particular, a position in which the suction side of the rotor blade faces upwards and the pressure side faces downwards. When viewed along the length axis from the root end towards the tip end, the joint line between the blade shells of the rotor blade may increase from left to right in the further position. In other words, in this viewing direction and when the rotor blade is in the further position, the joint line between the blade shells is rotated counter-clockwise with respect to the horizontal line by more than 0° and less than 90°, e.g. by an angle between 2° and 10 °.

According to a further embodiment, the method further comprises the steps of detaching the rotor blade from the transport arrangement at the construction site, lifting the rotor blade up to the rotor hub of the wind turbine and connecting the rotor blade with the rotor hub, particularly with the blade bearing thereof. The steps are, in particular, executed when the tower of the wind turbine is already installed and when the rotor hub is already mounted at the top of the tower. Lifting of the rotor blade may be done with a crane. The rotor blade is, in particular, connected to a rotor hub having a hydraulic pitch setting system.

According to a further embodiment, the rotor blade is kept in its assembly position from the time it is detached from the transport arrangement until it is connected to the rotor hub. That is, at the construction site, the rotor blade is not rotated around its length axis before it is connected to the rotor hub.

According to a further embodiment, the method further comprises the steps of detaching the rotor blade from the further transport arrangement, rotating the rotor blade from the further position to the assembly position and installing the rotor blade in the transport arrangement.

Next, the transport system for transporting a rotor blade is specified. The transport system particularly enables the installation/assembly of the transport arrangement and the transport of the rotor blade in its assembly position. All features disclosed in connection with the method for transporting a rotor blade are therefore also disclosed for the transport system and vice versa.

According to an embodiment, the transport system is for transporting a rotor blade for a wind turbine. The wind turbine may have a hydraulic pitch setting system. The transport system comprises components for supporting the rotor blade, e.g. a root support element connectable to the root end of the rotor blade and a clamping device into which a section of the rotor blade distant from the root end can be clamped. By connecting the components of the transport system to a rotor blade, e.g. by connecting the root support element to the root end of a rotor blade and by clamping a section of the rotor blade distant from the root end into the clamping device, the transport system enables the transport of the rotor blade to a construction site with the rotor blade being in an assembly position so that, when arriving at the construction site, the rotor blade can be lifted up to the rotor hub of the wind turbine and can be connected to the rotor hub without a rotation of the rotor blade around its length axis.

In other words, the transport system enables the rotor blade to be supported in the assembly position. When the components of the transport system are connected to the rotor blade, the above specified transport arrangement is realized. Particularly, the transport system may be a kit of parts which can be assembled into the transport arrangement by connecting them to a rotor blade.

According to a further embodiment, the transport system further comprises a packing. The packing has an upper and a lower surface. The upper surface is configured to adjoin the suction side of the rotor blade and the lower surface is configured to adjoin the pressure side of the rotor blade. The clamping device is configured to clamp a section of the rotor blade distant from the root end between the upper and the lower surface of the packing.

A packing is herein understood as a component of the transport system which is configured to receive the section of the rotor blade clamped in the clamping device. The packing, or at least the upper and the lower surface thereof, may be formed of a plastic and/or a soft material in order to prevent damage to the rotor blade. For example, the material of the upper and the lower surface is a rubber, like EPDM (ethylene propylene diene monomer). The packing is formed, for example, such that the upper and the lower surface conformally or formfittingly, respectively, adjoin the section of the rotor blade.

The upper surface of a packing is herein defined as the surface facing downwards and adjoining the rotor blade during the transport and the lower surface of the packing is herein defined as the surface facing upwards and adjoining the rotor blade during the transport.

The upper surface of the packing reshapes, for example, the suction side of the to-be-transported rotor blade in the area of the section to be clamped in the clamping device. The lower surface of the packing may reshape the pressure side of the-to-be transported rotor blade in the area of the section to be clamped in the clamping device.

The upper surface of the packing may be formed by an upper panel or mold of the packing and the lower surface of the packing may be formed by a lower panel or mold of the packing. The upper and the lower panels/molds may be separate elements.

The upper surface of the packing may be connected to the upper part of the clamping device and the lower surface of the packing may be connected to the lower part of the clamping device. Thus, when the section of the rotor blade is clamped between the upper and the lower part, the upper and the lower surface of the packing may be pressed against the suction side and the pressure side by means of the clamping device. For example, the clamping device has a system that allows the distance between the upper part and the lower part to be modified in order to control the pressure exerted on the suction side and the pressure side of the rotor blade.

The packing may be mounted rotatably on the clamping device so that it can be rotated relative to the clamping device around a vertical axis, i.e. an axis perpendicular to the ground.

According to a further embodiment, the transport system further comprises a tip transport frame for supporting the clamping device. Particularly, when transporting the rotor blade, said clamping device may be connected to the tip transport frame. The clamping device may be pivotively connected/connectable to the tip transport frame so that it can be pivoted around an axis perpendicular to the length axis of the rotor blade and parallel to the ground in order to ensure that the rotor blade rests on the entire upper and lower surface of the packing. The position of the clamping device relative to the tip transport frame may be changeable in a direction parallel to the length axis of the rotor blade, e.g. by at least ± 100 mm from a central position.

According to a further embodiment, the transport system comprises at least one further clamping device into which a section of the rotor blade distant from the root end can be clamped. By connecting the root end of the rotor blade to the root support element and by clamping a section of the rotor blade distant from the root end into the further clamping device, the transport system enables the transport of the rotor blade in a further position, in which the rotor blade is rotated around its length axis compared to the assembly position. In other words, the transport system enables the rotor blade to be supported in the further position.

The transport system may comprise a further packing which is used together with the further clamping device. Like the packing, the further packing may comprise an upper surface for adjoining the suction side and a lower surface for adjoining the pressure side.

According to a further embodiment, the tip transport frame is connectable either to the clamping device or to the further clamping device so that the transport system enables the transport of the rotor blade either in the assembly position or the further position depending on whether the clamping device or the further clamping device is connected to the tip transport frame. In other words, when using the clamping device, the rotor blade would be supported in the assembly position and when using the further clamping device, the rotor blade would be supported in the further position.

Next, the transport arrangement is specified. The transport arrangement may be the transport arrangement described in connection with the method for transporting a rotor blade. Therefore all features disclosed for the method are also disclosed for the transport arrangement and vice versa.

According to an embodiment, the transport arrangement comprises the transport system according to any of the embodiments described herein. Furthermore, the transport arrangement comprises a rotor blade for a wind turbine, particularly for a wind turbine having a hydraulic pitch setting system. The root support element is connected to the root end of the rotor blade and a section of the rotor blade distant from the root end is clamped into the clamping device. The rotor blade is supported in the assembly position.

The transport arrangement may additionally comprise the tip transport frame to which the clamping device is connected and by which the clamping device and thus the rotor blade is supported.

Next, the vehicle is specified.

According to an embodiment, the vehicle comprises the transport arrangement according to any of the embodiments described herein. The vehicle is configured to transport the transport arrangement from one location to another with the rotor blade being in the assembly position.

The vehicle is, for example, a truck or a dolly. The transport arrangement may be loaded onto a loading area of the vehicle. The loading area may be realized by a flatbed trailer.

Next, a use of the transport system is specified.

According to an embodiment, the transport system according to any one of the embodiments described herein is used for transporting a rotor blade from one location to another location with the rotor blade being in the assembly position.

The transport system may be used for a road transport. For example, the transport system is first used to transport a rotor blade from a starting site to a storage site and is then used to transport the rotor blade from the storage site to the construction site of the wind turbine.

Hereinafter, the transport system, the transport arrangement, the vehicle and the method for transporting a rotor blade will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.
Figure 1 shows an exemplary embodiment of a wind turbine,
Figures 2 to 4 show an exemplary embodiment of the transport system and the transport arrangement in different views,
Figures 5 to 8 show different components of an exemplary embodiment of the transport system,
Figure 9 shows an exemplary embodiment of a rotor blade during transportation, and
Figure 10 shows another exemplary embodiment of a rotor blade during transportation,
Figure 11 shows a flowchart of an exemplary embodiment of the method for transporting a rotor blade,
Figure 12 shows an exemplary embodiment of the vehicle.

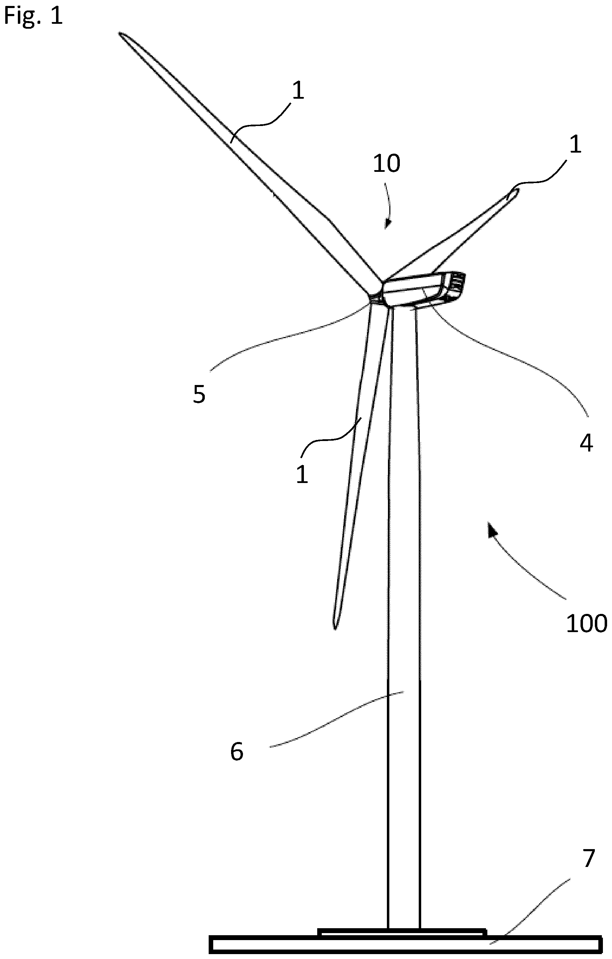

Figure 1 shows a wind turbine 100 which comprises a tower 6. The tower 6 is fixed to the ground by means of a foundation 7. A nacelle 4 is rotatably mounted at one end of the tower 6, opposite to the ground. The nacelle 4 comprises, for example, a generator which is coupled to a rotor 10 via a gearbox (not shown). The rotor 10 comprises three (wind turbine) rotor blades 1, which are arranged on a rotor hub 5, said rotor hub 5 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

In order to optimize the energy output of the wind turbine 100, the rotor blades 1 are rotatable around their respective length axis so that the pitch angles of the rotor blades 1 can be changed (individually and/or collectively). For this purpose, the wind turbine 100 comprises a pitch setting system (not shown). Such a pitch setting system can be realized with electric motors or hydraulic systems, like hydraulic cylinders. The installation of the rotor blades 1 in the case of a hydraulic pitch setting system can be challenging since the rotor blades 1 need to be in a certain angular position, herein called "assembly position", when being lifted to the rotor hub 5 and connected thereto. The present invention suggests to transport the rotor blades 1 to the construction site already in the respective assembly position, which saves time and space at the construction site.

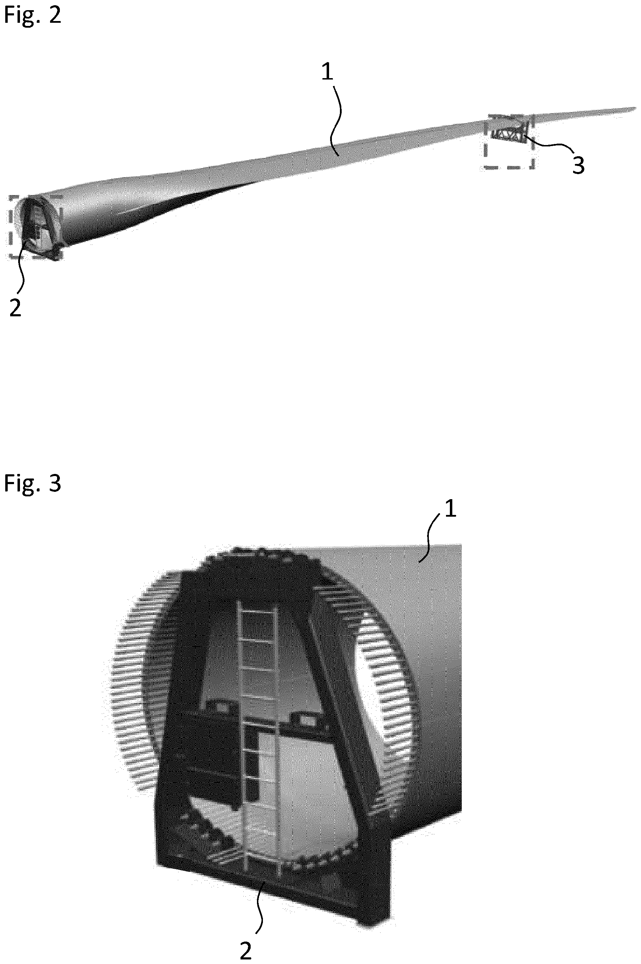

Figure 2 shows an exemplary embodiment of a transport system with which a transport in the assembly position is enabled. The transport system comprises several components 2, 3 which are connected to a rotor blade 1 and support the rotor blade 1. The composite of the rotor blade 1 and the components 2, 3 of the transport system is herein called "transport arrangement".

The components of the transport system are a root support element 2 in the form of a root transport frame and a tip support structure 3. The root support element 2 is connected to the root end of the rotor blade 1 and the root support structure 3 supports a section of the rotor blade 1 distant from the root end.

Figure 3 shows a detailed view of the root support element 2 which is connected to the root end of the rotor blade 1. The root support element 2 comprises a plurality of holes, slots or drillings, in which bolts of the root end of the rotor blade 1 are inserted. This allows the rotor blade 1 to be connected to the root support element 2 in almost any angular position. "Angular position" herein means the angle of rotation around the length axis of the rotor blade.

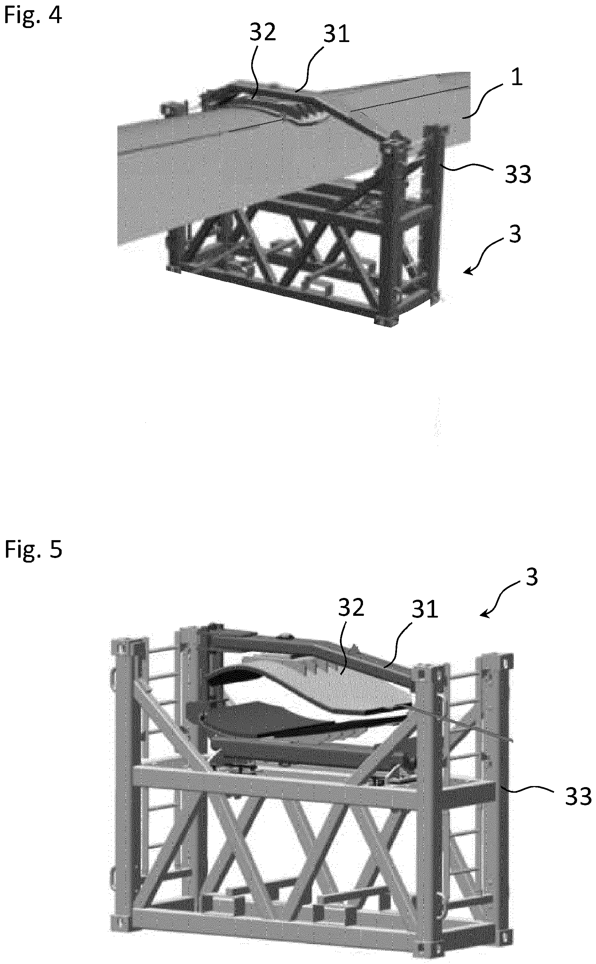

Figure 4 shows a detailed view of the tip support structure 3 supporting a section of the rotor blade 1 distant from the root end. The tip support structure 3 comprises a tip transport frame 33. A clamping device 31 is attached to the tip transport frame 33. A packing 32 is attached to the clamping device 31 so that, by means of the clamping device 31, the rotor blade 1 is clamped in the packing 32.

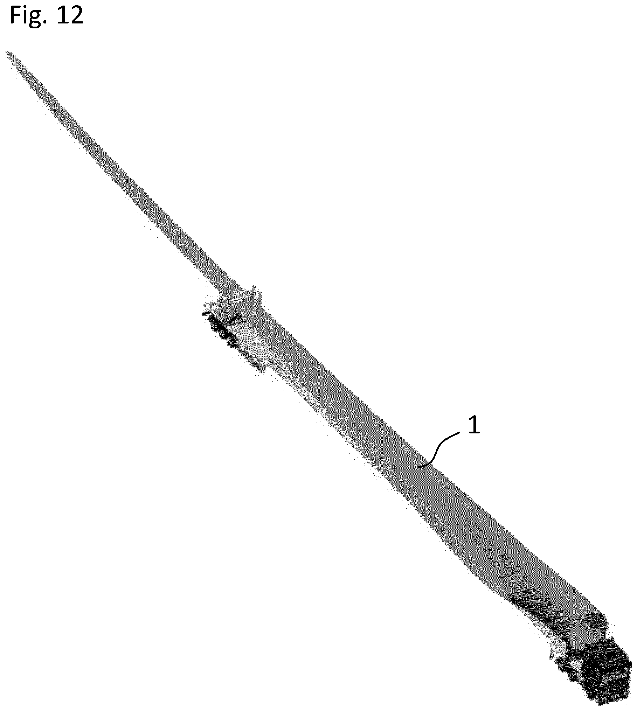

With the transport arrangement as realized in figures 2 to 4, the rotor blade 1 is supported in the assembly position. This transport arrangement can be transported to the construction site so that, when the rotor blade 1 arrives at the construction site, it is already in the assembly position and therefore only has to be detached from the transport arrangement and lifted up to the rotor hub for a connection thereto. A rotation of the rotor blade 1 around its length axis at the construction site is no longer necessary. The transport to the construction site can be done by a vehicle, e.g. a truck having a loading platform on which the transport arrangement is arranged (see figure 12).

Figure 5 shows a detailed view of the tip support structure 3 without the rotor blade 1.

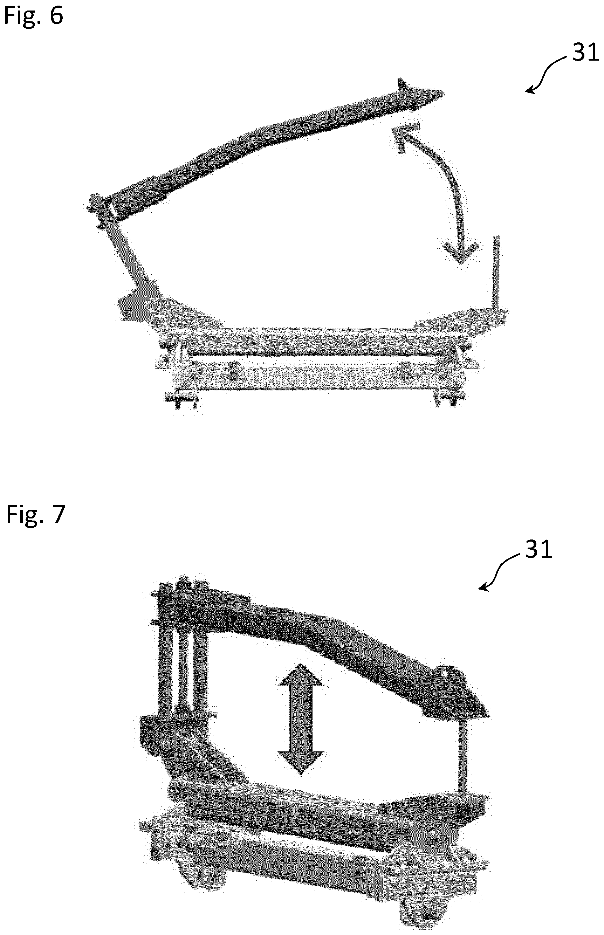

Figures 6 and 7 show the clamping device 31 without the packing and the tip frame. The clamping device 31 comprises an upper part and a lower part which are hingably connected to each other. The upper part can be lifted relative to the lower part in order to open the clamping device and to insert the rotor blade (see figure 6). Moreover, when the clamping device is closed, the upper part and the lower part can be moved vertically relative to each other in order to change their vertical distance (see figure 7). Thus, the pressure with which the rotor blade 1 is clamped in the packing can be adjusted.

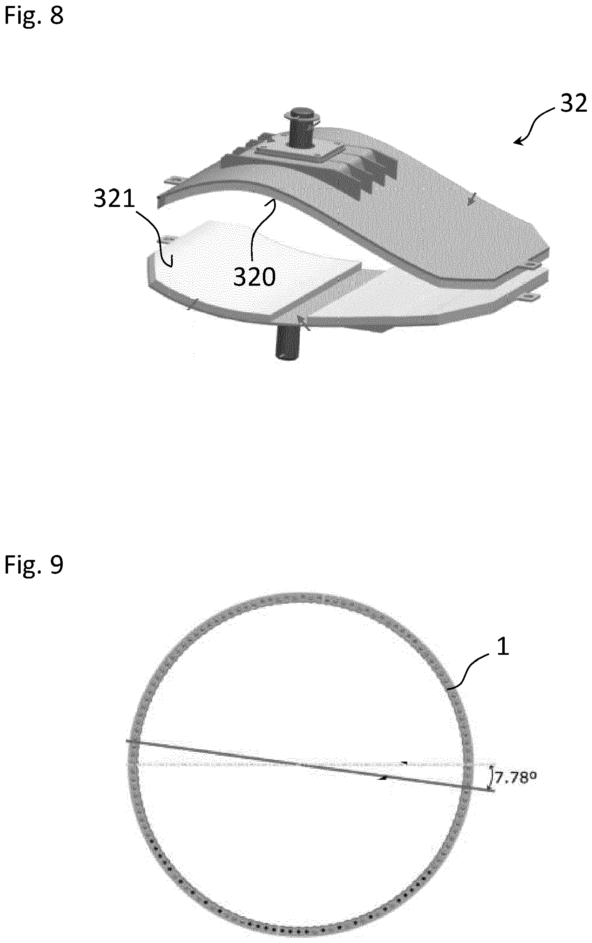

Figure 8 shows the packing 32 in more detail. The packing 32 comprises an upper panel having an upper surface 320 and a lower panel having a lower surface 321. The surfaces 320 and 321 are designed such that, when the section of the rotor blade 1 is clamped in between them, the surfaces 320, 321 form-fittingly adjoin the suction side and the pressure side, respectively. Particularly, the special design of the packing 32 (see figure 8) and of the clamping device 31 (see figures 6 and 7) enables the transport of the rotor blade in the assembly position because the rotor blade 1 is reliably and securely supported in the assembly position in the transport arrangement.

Figure 9 shows a rotor blade 1 when viewed along its length axis from the root end towards the tip end. The rotor blade 1 is in the assembly position. In the assembly position, the joint line (solid line) between the blade shells of the rotor blade is rotated by 7.78° clockwise compared to the horizontal line (dashed-dotted line).

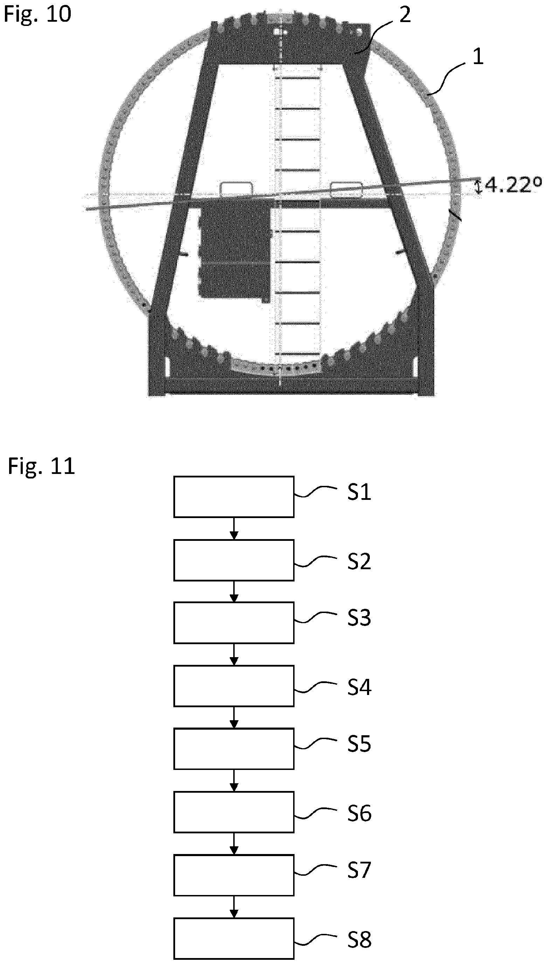

Figure 10 shows a rotor blade 1 connected to a root support element 2 in the same view as figure 9 but now with the rotor blade 1 being in a further position which is, for example, a standard transport position. Here, the joint line (solid line) between the blade shells of the rotor blade 1 is rotated counter-clockwise compared to the horizontal line (dashed-dotted line). Thus, the assembly position of figure 9 is rotated clockwise by 12° compared to the further position of figure 10.

For the transport in the further position of figure 10, a further clamping device and a further packing may be used which are specially adapted for supporting the rotor blade 1 in this position. The root support element and the tip transport frame may, however, may be same as used for the assembly position. The further clamping device and the further packing may be part of the transport system. Depending on whether the clamping device 31 and the packing 32 or the further clamping device and the further packing are connected to the tip transport frame 33, either the transport arrangement of figure 1 or a further transport arrangement with the rotor blade 1 supported in the further position may be realized.

Figure 11 shows a flowchart of an exemplary embodiment of the method for transporting a rotor blade. For this method, the transport system comprising the root support element 2, the tip transport frame 33, the clamping device 31, the packing 32, the further clamping device and the further packing as described before may be used.

In a step S1, the rotor blade is transported from a starting site (e.g. a harbor) to a storage site while in the further position (see figure 10). In a step S2, the rotor blade is then disconnected from root support element 2 and the further clamping device, rotated from the further position to the assembly position (step S3) and then connected to the root support element 2 and the clamping device 31 in the assembly position (step S4). In a step S5, the rotor blade is then transported from the storage site to the construction site of the wind turbine while in the assembly position. At the construction site, the rotor blade is then disconnected from the root support element 2 and the clamping device 31 (step S6), lifted up to the rotor hub of the wind turbine (step S7) and then connected to the rotor hub (step S8). During the execution of steps S6 to S8, the rotor blade stays in the assembly position the entire time.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs:

- 1: rotor blade
- 2: root support element
- 3: tip support structure
- 4: nacelle
- 5: rotor hub
- 6: tower
- 7: foundation
- 10: rotor
- 31: clamping device
- 32: packing
- 33: tip transport frame
- 100: wind turbine
- 320: upper surface
- 321: lower surface
- S1 to S8: method steps

## Claims

1. Method for transporting a rotor blade (1) for a wind turbine (100) with a hydraulic pitch setting system, the method comprising the steps of
- providing a transport arrangement in which the rotor blade (1) is supported in an assembly position,
- transporting the rotor blade (1) in the transport arrangement from a storage site to a construction site so that, when the rotor blade (1) arrives at the construction site, it is in the assembly position and can be lifted up to the rotor hub (5) of the wind turbine (100) and can be connected to the rotor hub (5) without a rotation of the rotor blade (1) around its length axis.

2. Method according to claim 1, wherein
- the transport arrangement comprises, besides the rotor blade (1), a root support element (2) and a clamping device (31), wherein
- the root support element (2) is connected to the root end of the rotor blade (1) and a section of the rotor blade (1) distant from the root end is clamped into the clamping device (31) .

3. Method according to claim 1 or 2, wherein
- the transport of the rotor blade (1) from the storage site to the construction site is a road transport.

4. Method according to any one of the preceding claims, further comprising the step of
- transporting the rotor blade (1) from a starting site to the storage site in a further transport arrangement, in which the rotor blade (1) is supported in a further position,
wherein, in the further position, the rotor blade (1) is rotated around its length axis compared to the assembly position.

5. Method according to claim 4, wherein
- the rotor blade (1) is rotated by at least 5° and at most 20° between the further position and the assembly position.

6. Method according to any one of the preceding claims, further comprising the steps of
- detaching the rotor blade (1) from the transport arrangement at the construction site;
- lifting the rotor blade (1) up to the rotor hub (5) of the wind turbine (100);
- connecting the rotor blade (1) with the rotor hub (5);
- wherein the rotor blade (1) is kept in the assembly position from the time it is detached from the transport arrangement until it is connected to the rotor hub (5).

7. Method according to claim 4 or any one of claims 5 or 6 in its dependency on claim 4, further comprising the steps of
- detaching the rotor blade (1) from the further transport arrangement;
- rotating the rotor blade (1) from the further position to the assembly position;
- installing the rotor blade (1) in the transport arrangement.

8. Transport system for transporting a rotor blade (1) for a wind turbine (100) having a hydraulic pitch setting system, the transport system comprising
- a root support element (2) connectable to the root end of the rotor blade (1),
- a clamping device (31) into which a section of the rotor blade (1) distant from the root end can be clamped, wherein
- by connecting the root support element (2) to the root end of a rotor blade (1) and by clamping a section of the rotor blade (1) distant from the root end into the clamping device (31), the transport system enables the transport of the rotor blade (1) to a construction site with the rotor blade (1) being in an assembly position so that, when arriving at the construction site, the rotor blade (1) can be lifted up to the rotor hub (5) of the wind turbine (100) and can be connected to the rotor hub (5) without a rotation of the rotor blade (1) around its length axis.

9. Transport system according to claim 8, further comprising
- a packing (32), wherein
- the packing (32) has an upper (320) and a lower (321) surface, wherein the upper surface (320) is configured to adjoin the suction side of the rotor blade (1) and the lower surface (321) is configured to adjoin the pressure side of the rotor blade (1),
- the clamping device (31) is configured to clamp the section of the rotor blade (1) distant from the root end between the upper (320) and the lower (321) surface of the packing (32).

10. Transport system according to claim 8 or 9, further comprising
- a tip transport frame (33) for supporting the clamping device (31).

11. Transport system according to any one of claims 8 to 10, further comprising
- at least one further clamping device into which a section of the rotor blade (1) distant from the root end can be clamped, wherein
- by connecting the root end of the rotor blade (1) to the root support element (2) and clamping a section of the rotor blade (1) distant from the root end into the further clamping device, the transport system enables the transport of the rotor blade (1) in a further position, in which the rotor blade (1) is rotated around its length axis compared to the assembly position.

12. Transport system according to claims 10 and 11, wherein
- the tip transport frame (33) is connectable either to the clamping device (31) or the further clamping device so that the transport system enables a transport of the rotor blade (1) either in the assembly position or the further position depending on whether the clamping device (31) or the further clamping device is connected to the tip transport frame (33).

13. Transport arrangement comprising
- the transport system according to any one of claims 8 to 12,
- a rotor blade (1) for a wind turbine (100) having a hydraulic pitch setting system, wherein
- the root support element (2) is connected to the root end of the rotor blade (1),
- a section of the rotor blade (1) distant from the root end is clamped into the clamping device (31),
- the rotor blade (1) is supported in the assembly position.

14. Vehicle comprising the transport arrangement according to claim 13, wherein the vehicle (1000) is configured to transport the transport arrangement from one location to another location with the rotor blade (1) being in the assembly position.

15. Use of the transport system according to any one of claims 8 to 12 for transporting a rotor blade (1) from one location to another location.
